(19) Europäisches Patentamt
European Patent Office
Office européen des brevets

(11) **EP 1 513 411 B1**

(12) **EUROPEAN PATENT SPECIFICATION**

(45) Date of publication and mention
of the grant of the patent:
**14.05.2008 Bulletin 2008/20**

(21) Application number: **03755973.9**

(22) Date of filing: **02.06.2003**

(51) Int Cl.:
*A23C 19/16* (2006.01)        *A23L 1/00* (2006.01)

(86) International application number:
**PCT/EP2003/005841**

(87) International publication number:
**WO 2003/101214 (11.12.2003 Gazette 2003/50)**

(54) **COATING COMPOSITION WITH LOW WATER-VAPOUR PERMEABILITY FOR FOOD AND FOOD INGREDIENTS, IN PARTICULAR CHEESE, AND ITS USE**

ZUSAMMENSETZUNG MIT GERINGER DAMPFDURCHLÄSSIGKEIT FÜR LEBENSMITTEL UND LEBENSMITTELZUTATEN, IM BESONDEREN KÄSE, UND DEREN VERWENDUNG

COMPOSITION D'ENROBAGE A FAIBLE PERMEABILITE A LA VAPEUR D'EAU POUR ALIMENTS ET INGREDIENTS ALIMENTAIRES, EN PARTICULIER DU FROMAGE, ET SON UTILISATION

(84) Designated Contracting States:
**AT BE BG CH CY CZ DE DK EE ES FI FR GB GR HU IE IT LI LU MC NL PT RO SE SI SK TR**

(30) Priority: **31.05.2002 EP 02077190**

(43) Date of publication of application:
**16.03.2005 Bulletin 2005/11**

(73) Proprietor: **CSK Food Enrichment B.V.
8901 BA Leeuwarden (NL)**

(72) Inventors:
• **VAN BOVEN, A.,**
**c/o CSK Food Enrichment B.V.
8901 BA Leeuwarden (NL)**
• **LAUTENBACH, S.,**
**c/o CSK Food Enrichment B.V.
8901 BA Leeuwarden (NL)**
• **KOOPMANS, W.J.,**
**c/o CSK Food Enrichment B.V.
8901 BA Leeuwarden (NL)**
• **KEVELAM, J.,**
**c/o CSK Food Enrichment B.V.
8901 BA Leeuwarden (NL)**

(74) Representative: **Huygens, Arthur Victor
Octrooibureau Huygens,
P.O. Box 86
3400 AB Ijsselstein (NL)**

(56) References cited:
**EP-A- 0 136 717          EP-A- 1 151 671
WO-A-02/074856          US-A- 3 388 085**

Remarks:
The file contains technical information submitted after the application was filed and not included in this specification

**Description**

The present invention relates to the use of a composition for coating food and food ingredients, in particular cheese. More in particular, the invention relates to a protective cheese coating allowing control of evaporative water loss from the cheese.

It is well known in the art that for a controlled ripening and protection of hard and semi-hard cheeses such as Dutch Gouda, the cheeses are usually treated with a dispersion which upon drying forms a protective film around the cheese. Such a coating fulfills essentially the following demands:

- protection of the cheese
- prevention of formation of cracks during ripening
- carrier of fungicides
- cosmetic reasons: colour, avoiding contamination, etc.

The processing of cheese usually involves applying aqueous dispersions of polymers, in particular copolymers of vinyl acetate and di-(n-butyl) maleinate, having typically a solids content of between 40 and 50 wt%. The relatively viscous dispersion is generally either applied automatically by a coating machine, or manually, with a sponge or the like.

A common coating procedure involves covering the sides and the top half of the cheese immediately after leaving the brine bath, then after 48 hours turning the cheese and treating the remaining part. This process of treating the sides and one half of the cheese is repeated at t = 4, 6, 9, 12, and 15 days and thereafter at larger time intervals depending on the type of cheese, storage conditions and, possibly, other factors. Other coating procedures with different time intervals may also be applied.

After application of this material to the cheese-rind, a film is formed by the drying of the coating material. Under storage-house conditions (temperature and relative humidity, RH) a film is usually formed within 24 hours.

A major drawback of the application of the current commercially available cheese coatings such as CesKa®-coAt WL (CSK Food Enrichment, Leeuwarden, The Netherlands) is the relatively high loss of water out of the cheese. Under practical conditions (RH = 85% and T = 12-14 °C), 10-12% of the cheese weight can be lost in 10-12 weeks of ripening due to the evaporation of water out of the cheese.

To prevent excessive evaporative loss of water from the cheese during ripening, the relative humidity at storage is already high (>85%). Under these storage conditions, an excess of mould growth may occur which then frequently results in serious adverse effects; sometimes mould growth is so excessive that the cheese can not be sold for consumption.

It is also known in the art that evaporative water loss can be blocked by applying substances such as paraffin on top of the cheese coating. Such a process is commonly applied for cheeses which are not sold directly. These materials have a major drawback in that ripening of the cheese which is necessary for a well-balanced cheese and optimal cheese taste, is blocked as well. This is clearly an unwanted situation.

The prior art discloses various alternatives to solve the problems of oxygen and water-permeability and/or lack of ripening, in particular by providing biodegradable coating compositions.

For example, Dutch Patent Application No. 9201710 discloses a cheese coating for semi-hard and hard cheese in the form of a polymeric layer, where the polymer is an edible, water-soluble and biologically degradable biopolymer, in particular a milk protein, viz. casein, a caseinate, or whey protein. Caseinates such as sodium caseinate or calcium caseinate are mentioned as preferred polymers. The cheese coating further comprises an optional plasticizer, such as glycerol, sorbitol or xylitol, to improve its flexibility.

Although such a cheese coating has certain advantages relative to cheese coatings which apply a plastic dispersion as the polymer, for example vinyl acetate-dibutyl maleinate copolymer (e.g. in CesKa®-coAt WL cheese coatings, a product of CSK food enrichment BV, Leeuwarden, the Netherlands), the oxygen and water permeability of the biodegradable composition was found to be greater than in compositions with a plastic dispersion.

Dutch Patent Application No. 9201820 describes an edible emulsion for the coating of foodstuff, such as cheese or sausages, which comprises 60-80 wt.% of water, 2-25 wt.% of oil or fat, 5-25 wt.% of protein and 0,1-3 wt.% of melt salt. The protein to be used which serves as an emulsifying agent is, according to the description, for example a milk protein or soy protein. In particular casein proteins are mentioned. The protein/fat ratio in the emulsion is usually between 2:1 and 1:2. No mention is made of the use of plasticizers.

U.S. Patent No. 5,543,164 discloses a method for preparing water-insoluble, edible coatings and - in particular - films for food items, wherein a denatured sugar-free protein solution is applied in a amount of 5 to 20 wt.%. The examples are illustrated by whey protein isolate, which substance contains more than 95% protein by definition. The films and the coating compositions may also contain further ingredients, such as lipids and plasticizers.

European patent application EP-A-0 465 801 describes an edible moisture barrier coating for edible foodstuff materials, such as cake, chocolate, almonds, pizzas, pastas and vegetables, comprising from 70 to 95% of an aqueous solution of a protein isolate, 30 to 5% of a mixture of a saturated lipid having a melting point above 30°C, and an emulsifyer containing an amount of 5 to 30 wt.% based on the weight of the lipid, and the emulsifier containing one or more diacetyl tartaric esters of monoglycerides.

WO 00/49899 discloses biodegradable coatings and films for food products, obtained from cross-linked mixtures of insoluble caseinate and whey protein. The compositions may also contain a plasticizer and/or a polysaccharide.

WO 01/80658 (CSK food enrichment) discloses compositions for coating foodstuff, in particular cheese, which closely approach and sometimes even exceed the characteristics of cheese coatings in which a plastic dispersion is applied, and which are also edible and biologically degradable. These compositions comprise (a) 3-35% globular protein, optionally supplemented with one or more additional film forming components; (b) 5-55% sugar; (c) 3-20% fat; (d) 5-15% plasticizer; (e) 0-5% thickener; (f) 0-20% filler; (g) 0-5% fungicide; wherein the dry solids content of the aqueous emulsion is 20-60%.

DE 10112431 (Clariant GmbH) which was published after the priority date of the present patent application discloses aqueous plastic material dispersions based on vinyl ester copolymers with a solid matter content of up to 80 wt.% and a minimum film-forming temperature of less than 20°C, which are essentially stabilised by ionic components. These vinyl ester copolymers contain at least one homopolymer or copolymer A and at least one homopolymer or copolymer B.

EP-A-1151671 discloses a composition for coating hard cheese and sausages comprising an aqueous dispersion of shellac, an ethylene/vinyl acetate copolymer and an ionic component (e.g. NaOH or KOH) as a pH-modifyer resulting when applied on the surface of the cheese or sausage in a glossy, hard coating layer.

WO 02/074856 discloses an aqueous emulsion containing vinyl acetate/ethylene copolymer and an ionic compound (e.g. zinc formaldehyde sulfoxylate). The composition can be used as a coating material for food which has good oxygen barrier properties.

Despite the advantageous properties of the latter compositions, there is still room for improvement, in particular because in actual practice the water permeability of the biodegradable coatings appears often difficult to control.

Therefore, it is an object of the present invention to provide and apply a raw material for cheese coatings which has a significantly lower water permeability than the coating dispersions hitherto known. It is another object of the present invention that the coatings so obtained result in higher production yields either through the direct effect of reduced evaporative weight loss on the value of the cheese under storage conditions or through the effect that the cheese can be stored under conditions of lower relative humidity, thereby preventing excessive growth of moulds and yeasts while still keeping a satisfactory amount of water in the cheese, or through both.

Surprisingly, it has now been found that these objectives can be met by using, as the most essential raw material for the coating, a copolymer comprising vinyl acetate and ethylene stabilised with ionic components.

The invention is therefore characterised by the use of a coating composition made of a water-borne dispersion consisting of a copolymer substantially made of vinyl acetate and ethylene stabilised with one or more ionic components in the manufacturing of cheese, the cheese being selected from the group consisting of Gouda cheese, Maasdam cheese, Edam cheese, Emmental cheese, Gruyère cheese, Parmesan cheese, and Cheddar cheese, for reducing evaporative loss of said cheese and/or for storing said cheese under conditions of lower relative humidity. The coating has, when applied on food and food ingredients, a water vapour permeability of less than 140 g/m$^2$.24h, more preferably less than 100 g/m$^2$.24h, most preferably less than 70 g/m$^2$.24 h. The coating according to the present invention is especially useful when applied on cheese.

A suitable and preferred commercially available product which is useful for providing the main ingredients for a dispersion to form a coating according to the invention is Mowilith LDM 1481, from Celanese Emulsions GmbH, Frankfurt am Main, Germany). Another commercially available product which is suitable for this purpose is Mowilith LDM 1850, also from Celanese Emulsions GmbH. These products can be used as such, i.e. without further ingredients. Further ingredients for the coating according to the present invention, the preparation of such a coating and its use are essentially similar to the ingredients and methods which are applied for prior art coatings with well known plastic dispersions, such as vinyl acetate-dibutyl maleinate copolymers. A person skilled in the art will have no difficulty in selecting these further ingredients and the conditions of use, and optimizing the proportions, if desired. See, for example, WO 01/80658 the disclosure of which is incorporated herein by reference.

Importantly, although the coating according to the present invention regulates moisture loss from the cheese, the ripening process is not negatively influenced. Dispersions of these improved barrier coating materials can be applied according to a procedure similar to the coating protocol for currently used dispersions such as CesKa®-coAt WL mentioned above.

As an additional advantage, by using the coating dispersions disclosed herein, a less thick rind of the cheese will be formed as compared with cheeses treated with state of the art coating dispersions such as CesKa®-coAt WL. This provides an advantage with regard to the perceived texture of the cheese, particularly in case of reduced fat cheeses.

Thus, in accordance with the present invention cheese coatings are provided comprising a copolymer with vinyl acetate and ethylene as the prevalent monomer constituents, which have significantly lower water vapour permeability as compared with the state of the art, thus allowing the production of cheese having a relatively high water content, whilst the quality of the cheese, in particular of the taste, is not negatively influenced. Consequently, advantages of the present invention include improved texture of reduced fat cheese and the possibility to store cheese under conditions at lower relative humidity (i.e. having less risk of microbial growth on the exterior of the cheese) whilst keeping the moisture loss to an acceptable value.

Suitable vinyl acetate/ethylene copolymers for the cheese coatings according to the present invention are those which are essentially stabilised by ionic components, for example those disclosed in DE 10112431. Preferred components which are used as main ingredients in the coatings of the present invention are Mowilith LDM 1481 and Mowilith LDM 1850, mentioned above.

The coating composition may also contain a fungicide. Suitable fungicides include, for example, natamycin and potassium sorbate. The effective and preferred amounts primarily depend on the specific substance to be used. Generally an amount up to 5% will be sufficient, in particular an amount in the range of 2-3%, and preferably about 2.5%. In the case of natamycin, however, the amounts to be used are usually considerably smaller and they may vary from about 1 to 5000 ppm (= 0.5 wt.%), preferably 1 to 500 ppm.

The pH of the composition is suitably in the range of 3.5-6.0. However, a pH of 5 or lower and in particular of about 4.0 is generally preferred, since the storage life of the composition is thereby increased. Such a pH can be advantageously adjusted by the addition of a suitable acid, for example hydrochloric acid and/or acetic acid, or using of a suitable buffer solution.

As a general rule, the components to be used for the composition according to the invention are selected in such a way that they do not interfere with each other, i.e. they will not adversely affect the characteristics of the composition. In actual practice this will hardly result in any significant restrictions.

If desired, the composition according to the invention may be given an appropriate shine after its application to the substrate and drying. The shine is caused by several factors, such as the kind and amount of fat used. The desired shine and the composition which is needed therefore, i.e. the additives, can be experimentally determined by a person skilled in the art without problems.

The composition according to the invention preferably has a viscosity (Brookfield LVT, sp. 4, RT) of 20-200 Poise, more preferably 30-180 Poise and most preferably 50-150 Poise. The dry solids content generally is in the range of 20-60%, and preferably of 30-40%.

As an alternative embodiment for the preparation of the composition according to the invention the sequence of some steps can be changed.

The ready-for-use composition can be suitably stored for a longer period of time, from several days up to some 6 months, at a temperature of 10-20°C, preferably 10-15°C, and more preferably at 13°C, such as in a cheese store, before it is used.

The composition is generally applied to the desired product at a temperature of between 10-30°C, and the product is then dried. In general, the composition can be applied at any suitable point in time, as is the case now with state of the art compositions. The application may occur manually or mechanically in a way which is well known to a person skilled in the art. Drying generally occurs in the air, but may also be accelerated, if desired. Optionally an after-treatment of the product may take place, for example to reinforce its mechanical properties or to embellish its appearance. These steps are all known as such and will therefore not be discussed in detail.

The invention further relates to the use of a composition according to the invention, as described above, in the manufacturing or rather conservation of food and food ingredients. The composition is in particular suitable for application as cheese coating on cheese, both on semi-hard and hard cheese, such as Gouda cheese, Maasdam cheese, Edam cheese, Emmental cheese, Gruyère cheese, Parmesan cheese and Cheddar cheese, and can also be used on soft cheese, such as most French cheese and 'schmier' cheese. The cheese on which the composition according to the invention is applied may be of any source, for example cheese made from cow milk, goat milk, sheep milk, etc., or mixtures thereof. The composition can also be applied on other foodstuff, such as sausages, and food ingredients.

The invention is further illustrated by the following examples which are not to be construed as limiting the invention in any respect. The percentages in this specification are percentages by weight, unless stated otherwise. Commercially available cheese coatings based upon vinyl acetate - dibutylmaleate copolymers have been obtained from CSK Food Enrichment, Leeuwarden, The Netherlands. A typical product code is CesKa®-coAt WL xxx.yy.zz, wherein xxx relates to the content of natamycine, a fungicide, in ppm; yy relates to the concentration of a yellow dye, Annatto, and zz is the Brookfield viscosity (determined at room temperature using a Brookfield LVT viscosimeter, spindle 4).

Example 1

A Dutch Gouda cheese, of nominal weight 4.5 kg, is taken from the last stage of its production before coating (i.e. from the brine treatment) and coated according to a coating protocol as is known to the person skilled in the art. A dispersion containing a copolymer which is predominantly contained of vinyl acetate and ethylene is used for coating the cheese (Mowilith LDM 1850, ex Celanese Emulsions GmbH, Frankfurt, Germany).

The cheese is stored for several weeks at 13 °C; during storage, the cheeses receive a coating on both sides intermittently and at regular time intervals; weight loss is corrected for this treatment.

The cheese treated with the improved barrier coating, Mowilith LDM1850, is stored at a low relative humidity (RH = 78%). After 8 weeks of storage at 13 °C and 78% relative humidity, the weight loss of the cheese due to evaporation of water is surprisingly low: only ca. 9%!

In comparison, a Dutch Gouda cheese having the same initial weight, coming from the same production and having the same age after production is treated according to the same protocol with a commonly used cheese coating, viz. CesKa®-coAt WL 200.03.45, and is stored at a significantly higher relative humidity (RH = 88%). Although the cheese treated with Mowilith LDM1850 is stored at lower relative humidity, the weight loss of the cheese is virtually identical to the weight loss of the cheese treated with CesKa®-coAt WL 200.03.45 which is stored at higher RH.

This means that cheeses treated with improved barrier coatings according to this invention can be stored under conditions of much lower relative humidity, and have the same evaporative weight loss, as compared with cheeses which are treated with commonly applied coatings according to the state of the art.

Thus, according to the present invention, the cheese can be stored at conditions which are less favorable for growth of moulds and yeasts, whereas the evaporative weight loss of water can be controlled to acceptable levels.

Example 2

A Dutch Gouda cheese, of nominal weight 4.5 kg, is taken from the last stage of its production before coating (i.e. from the brine treatment) and coated according to a coating protocol as is known to the person skilled in the art. A dispersion containing a copolymer which is predominantly contained of vinyl acetate and ethylene is used for coating the cheese (Mowilith LDM 1850, ex Celanese Emulsions GmbH, Frankfurt, Germany).

The cheese is stored for several weeks at a temperature of 13 °C and at a relative humidity of 83%; during storage, the cheese receives a coating layer on both sides intermittently and at regular time intervals; weight loss is corrected for this treatment.

After 60 days of storage at the conditions indicated, the weight loss of the cheese due to evaporation of water is determined.

In comparison, a Dutch Gouda cheese having the same initial weight, coming from the same production, and having the same age after production is treated according to the same protocol with a commonly used cheese coating, viz. CesKa®-coAt WL 200.03.45, and is stored under identical conditions, i.e. in the same climatised room. The weight loss of the cheese after 60 days is significantly higher than the weight loss of the cheese treated with the exemplary object of this invention.

This means that cheeses treated with improved barrier coatings according to this invention can be stored under the same conditions of temperature and relative humidity, and have a much reduced weight loss, as compared with cheeses which are treated with commonly applied coatings according to the state of the art. Realising that the value of one cheese is reduced linearly with its weight, this example illustrates the intrinsic financial value of the use of improved barrier coatings.

Example 3

A Dutch Gouda cheese, of nominal weight 4.5 kg, is taken from the last stage of its production before coating (i.e. from the brine treatment) and coated according to a coating protocol as is known to the person skilled in the art. A dispersion containing a copolymer which is predominantly contained of vinyl acetate and ethylene is used for coating the cheese (Mowilith LDM 1481, ex Celanese Emulsions GmbH, Frankfurt, Germany).

The cheese is stored for several weeks at a temperature of 13 °C and at a relative humidity of 83%; during storage, the cheese receives a coating layer on both sides intermittently and at regular time intervals; weight loss is corrected for this treatment.

After 34 days of storage at the conditions indicated, the weight loss of the cheese due to evaporation of water was determined at 7.3%.

In comparison, a Dutch Gouda cheese having the same initial weight, coming from the same production and having the same age after production is treated according to the same protocol with a commonly used cheese coating, viz. CesKa®-coAt WL 200.03.45, and is stored under identical conditions, i.e. in the same climatised room. The weight loss of the cheese after 34 days is significantly higher than the weight loss of the cheese treated with the exemplary object of this invention and was determined at 9.4 wt%.

Again, this example illustrates that cheeses treated with improved barrier coatings according to this invention can be stored under the same conditions of temperature and relative humidity, and have a much reduced weight loss, as compared with cheeses which are treated with commonly applied coatings according to the state of the art. Mowilith LDM 1481 has the additional advantage of having a lower film tackiness as compared with Mowilith LDM 1850 or CesKa®-coAt WL. Also, the drying speed of Mowilith LDM 1481 is much enhanced as compared with CesKa®-coAt WL.

Example 4

Mowilith LDM 1481 is characterised by the fact that it combines a high solid matter content with a low viscosity. The Brookfield viscosity of the LDM 1481 dispersion mentioned in Example 3 is approx. 10 Poise. This is on the lower end of what is acceptable for a widely used type of automated application of the coating onto the cheese, using rotating strips of cloth. Therefore, the dispersion is thickened to a Brookfield viscosity of approx 60 Poise, using hydroxyethylcellulose. The performance on cheese is tested according to the following procedure.

A Dutch Gouda cheese, of nominal weight 4.5 kg, is taken from the last stage of its production before coating (i.e. from the brine treatment) and coated according to a coating protocol as is known to the person skilled in the art. A dispersion of Mowilith LDM 1481 with a Brookfield viscosity of 10 Poise (Mowilith LDM 1481, ex Celanese Emulsions GmbH, Frankfurt, Germany) is used for coating the cheese.

The cheese is stored for several weeks at a temperature of 13 °C and at a relative humidity of 83%; during storage, the cheese receives a coating layer on both sides intermittently and at regular time intervals; weight loss is corrected for this treatment.

After 34 days of storage at the conditions indicated, the weight loss of the cheese due to evaporation of water is determined at 7.3%.

In comparison, a Dutch Gouda cheese having the same initial weight, coming from the same production and having the same age after production is treated according to the same protocol with Mowiltih LDM 1481, thickened to a viscosity of 60 Poise using hydroxyethylcellulose, and is stored under identical conditions, i.e. in the same climatised room. Surprisingly, the weight loss of the cheese after 34 days is significantly less than the weight loss of the cheese treated with low viscous LDM 1481 coating and iss determined at 5.7 wt%.

Again, this example illustrates that cheeses treated with improved barrier coatings according to this invention can be stored under the same conditions of temperature and relative humidity, and have a much reduced weight loss, as compared with cheeses which are treated with commonly applied coatings according to the state of the art. Mowilith LDM 1481 has the additional advantage of having a lower film tackiness as compared with Mowilith LDM 1850 or CesKa®-coAt WL.

Example 5

The following example illustrates that improved barrier coatings can also be applied on cheeses which have already been treated using CesKa®-coAt WL, and still exhibit (some of) their properties to reduce evaporative water loss from cheese.

Two Dutch Gouda cheeses, of nominal weight 4.5 kg, are taken from the last stage of its production before coating (i.e. from the brine treatment) and coated according to a coating protocol as is known to the person skilled in the art using CesKa®-coAt WL 200.03.45, until the cheeses have an age of 28 days after production (ripening conditions: T = 13 °C; RH = 83%). One cheese continues to receive CesKa®-coAt WL at intermittent intervals, until it has reached an age of 80 days after production; its weight loss is then 15%. After 28 days, the other cheese receives treatments with Mowilith LDM 1481 (of viscosity 10 Poise), according to the same coating scheme as the cheese which is treated with CesKa®-coAt WL. After 80 days, the evaporative water loss of the latter cheese is only 14 wt.%

Example 6

The water vapour permeability of a film of 300 microns, obtained by drying of a dispersion of CesKa®-coAt WL 200.03.45, according to the procedure described below, is determined as (170 +/- 30) $g/m^2.d$ after 7 days (in further text reference, it will be simply stated that "the water vapour permeability of the coating is 170 +/- 30 $g.m^2.d$, implicitly taking into account the specific conditions mentioned above). The water vapour permeability of a film of 300 microns, obtained by drying of a dispersion of Mowilith LDM 1481, as determined under practically identical conditions, is significantly less, e.g. about 65 $g/m^2.d$. The water vapour permeability of a film of 300 microns, obtained by drying of a dispersion of Mowilith LDM 1850, as determined under practically identical conditions, is in the same order of magnitude as the WVP coefficient of a similar film from Mowilith LDM 1481.

The procedure for determining the WVP coefficient is as follows. A polymer film having a thickness of approx 300 $\mu$m is prepared by casting a diluted dispersion (solid contents approx 14 wt%) into a shallow metal dish. To faciliate loosening of the film, the metal dish is covered with a layer of poly(ethylene) foil. After drying of the dispersion for 2-3 days, the film is loosened from the foil, and circular cuts having a radius of 30 mm are made from the film. Duplicate slices of polymer film are first conditioned in a climatised room (T = 23 °C; RH = 50%) and then sealed to the open mouth of a glass test dish containing 10 g of demineralised water. The weight of the resulting assemblies is determined immediately after sealing and after storage in a climatised room at T = 23 °C and RH = 50% for seven days; the weight difference after 7 days is caused by diffusion of water vapour through the polymer film. The water vapour permeability (W V P) is determined as follows:

$$ WVP \quad = \quad \frac{\Delta m\ (7)}{SA \times time} \qquad \left[ \frac{g}{m^2\ d} \right] $$

wherein:

$\Delta m\ (7)$ is the evaporative weight loss due to diffusion of water from the test dish through the polymer film after 7 days, as determined by the weight of the sealed test dish after 7 days minus the weight of the sealed test dish immediately after sealing (i.e. at t = 0 days), expressed in g; SA is the surface area of the exposed polymer film (in $m^2$); time is the duration of the experiment, which is 7 days in our experiments. The obtained WVP value applies to a polymer film having a thickness of 300 $\mu$m.

**Claims**

1. Use of a coating composition which comprises a water-borne dispersion consisting of a copolymer substantially made of vinyl acetate and ethylene which is stabilised with one or more ionic components, in the manufacturing of cheese, the cheese being selected from the group consisting of Gouda cheese, Maasdam cheese, Edam cheese, Emmental cheese, Gruyère cheese, Parmesan cheese and Cheddar cheese, for reducing evaporative weight loss of said cheese and/or for storing said cheese under conditions of lower relative humidity.

**Patentansprüche**

1. Verwendung einer Beschichtungszusammensetzung, welche eine von Wasser getragene Dispersion umfasst, bestehend aus einem im Wesentlichen aus Vinylacetat und Ethylen hergestellten Copolymer, welches mit einer oder mehreren ionischen Komponenten stabilisiert ist, zur Herstellung von Käse, wobei der Käse ausgewählt ist aus Gouda, Maasdamer, Edamer, Emmentaler, Gruyere, Parmesan und Cheddar, zur Verringerung der Gewichtsreduktion des Käses durch Verdampfung und/oder zur Lagerung des Käses unter Bedingungen mit geringer relativer Feuchtigkeit.

**Revendications**

1. Utilisation d'une composition d'enrobage qui comprend une dispersion aqueuse consistant en un copolymère qui est substantiellement constitué d'acétate de vinyle et d'éthylène, stabilisé avec un ou plusieurs composants ioniques, dans la fabrication du fromage, le fromage étant choisi dans le groupe constitué par le Gouda, le Maasdam, l'Edam, l'Emmental, le Gruyère, le Parmesan et le Cheddar, afin de réduire la perte de poids par évaporation dudit fromage et/ou pour le stockage dudit fromage dans des conditions d'humidité relative inférieure.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- NL 9201710
- NL 9201820
- US 5543164 A
- EP 0465801 A
- WO 0049899 A
- WO 0180658 A
- DE 10112431
- EP 1151671 A
- WO 02074856 A